# EUROPEAN PATENT SPECIFICATION

(11) **EP 4 128 459 B1**
(45) Date of publication and mention of the grant of the patent: **08.07.2026**
(21) Application number: 21714136.5
(22) Date of filing: 19.03.2021
(51) Int. Cl.: H02H 3/00, H02H 7/08, H02H 7/085, H02H 9/00

(54) **A MOTOR-PROTECTIVE CIRCUIT BREAKER COMPRISING AN AUTOMATIC SETUP FUNCTION AND A METHOD OF USING SUCH A CIRCUIT BREAKER**
MOTORSCHUTZSCHALTER MIT AUTOMATISCHER EINRICHTFUNKTION UND VERFAHREN ZUR VERWENDUNG SOLCH EINES SCHUTZSCHALTERS
DISJONCTEUR DE PROTECTION DE MOTEUR COMPRENANT UNE FONCTION DE RÉGLAGE AUTOMATIQUE ET PROCÉDÉ D'UTILISATION D'UN TEL DISJONCTEUR

(30) Priority: 24.03.2020 GB 202004269
(43) Date of publication of application: 08.02.2023
(73) Proprietor: Eaton Intelligent Power Limited, Dublin 4 (IE)
(72) Inventor: MEID, Wolfgang, 56218 Mülheim-Kärlich (DE); SCHAAR, Ingo, 53123 Bonn (DE); STANKE, Stephan, 53359 Rheinbach (DE)
(74) Representative: Collingwood-Pierce, Alexandra Isobel Seymour
(86) International application number: PCT/EP2021/057153
(87) International publication number: WO 2021/191088

(56) References cited:
- US-A1- 2014 368 956

## Description

### TECHNICAL FIELD

This specification relates to a motor-protective circuit breaker comprising an automatic setup function and a method of using such a motor-protective circuit breaker.

### BACKGROUND

A motor-protective circuit breaker like of the type PKE offered by Eaton Industries GmbH, Bonn, Germany, comprises an overload protection for monitoring an electric motor for an overload situation and a short circuit protection. In case of a detected overload or short circuit situation, the motor-protective circuit breaker disconnects all poles of the electric motor from the power supply phases.

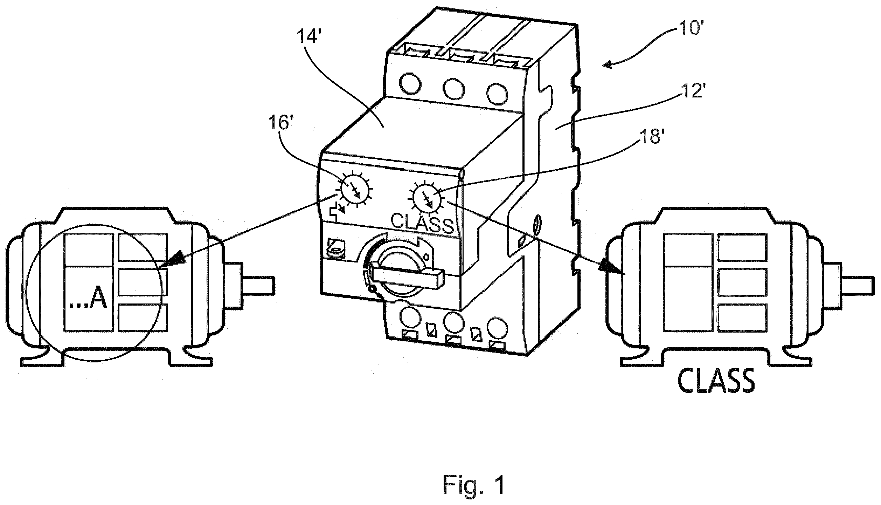

The PKE circuit breaker can be matched to the correspondingly rated electric motor with a manual setting dial. This comprises the setup of the operational current for a monitored motor. Also, a tripping class can be manually set. Fig. 1 shows the PKE circuit breaker 10' comprising a circuit breaker module 12' and a trip block 14' attached to the circuit breaker module 12'. The trip block 14' comprises a manual setting dial 16' for adjusting the motor rating in Ampere ranges and a manual setting dial 18' for the tripping class.

The tripping class defines the tripping behavior of an overload trip. For example, the PKE motor-protective circuit breaker allows to setup a tripping class CLASS 5 for easy startups of a motor, CLASS 10 for normal startups, and CLASS 15 to CLASS 20 for heavy to very heavy motor starting. By setting up the operational current of a motor and the tripping class, a relevant tripping characteristic can be obtained.

WO 2020/008019 A1 relates to a device protection switch with an intelligent limit value determination. In a training phase the device protection switch is adjusted to a certain device and its load behavior. In a subsequent monitoring phase, the values determined in the training phase are compared with current values or values derived from them and, if necessary, the current flow is interrupted.

US 2012/0275071 A1 relates to an arc-fault circuit-interrupter, which includes a capability for a controller in the interrupter-circuit to be placed in a learn mode. In learn mode, the controller may change firmware to reduce the probability of false tripping or nuisance tripping. Alternatively, in learn mode, the controller may store a signature to be used as the normal signature for a dedicated load.

US 2014/368956 A1 is directed to the field of motor protection for industrial automation systems, HVAC systems, pumping systems, and similar implementations, and, in particular, to motor starters and related electronics offering substantially automatically available protection and/or control of such motors.

### SUMMARY

This specification describes a motor-protective circuit breaker comprising an automatic setup function and a method of using such a motor-protective circuit breaker.

An aspect of this disclosure relates to a motor-protective circuit breaker comprising a circuit breaker unit, a trip unit, measurement means switched between the trip unit and motor contacts and provided for performing one or more measurements of current based measurements comprising a measurement of an inrush current of an electric motor, a measurement of an overload current of the electric motor, a measurement of a time to get into a normal operating current of the electric motor, a measurement of a normal operating current on the powering side of the circuit breaker, and for performing a measurement of an input impedance of the electric motor, controller means connected to the trip unit and the measurements means, storage means connected to the controller means, and switching means connected to the controller means, wherein the controller means are configured to be switched by the switching means into a learning state, and to perform the following operations in the learning state: performing measurements with the measurement means comprising at least one of the current based measurements and the measurement of the input impedance of the electric motor connected to the circuit breaker, processing the at least one performed current based measurement to generate at least one configuration parameter for the trip unit, storing the at least one configuration parameter in the storage means, and applying the at least one configuration parameter for configuring the trip unit, and wherein the controller means are configured to use the measured input impedance of the electric motor connected to the circuit breaker for identifying the motor type and to use the identified motor type to load and/or calculate a set of parameters comprising typical operating values of the identified type of motor.

The controller means may be configured to use the least one configuration parameter for determining a value for tripping.

The controller means may be configured to use the least one configuration parameter for determining a class value for defining a startup type of an electric motor connected to the circuit breaker, wherein the startup type comprises easy startup, normal startup, and heavy to very heavy startup.

The switching means may comprise at least one of the following: a mechanical switch; an electronic switch; a remote switch.

A further aspect of this disclosure relates to a method for using a motor-protective circuit breaker of any of the preceding claims, wherein an electric motor with at least one motor contact is provided, the at least one motor contact of the electric motor is electrically connected with a motor contact of the circuit breaker, and at least one power supply contact of the circuit breaker is electrically connected with a power supply line, wherein the method comprises the steps of closing at least one contact pair of the circuit breaker unit of the circuit breaker for supplying the electric motor with electric energy, activating the switching means of the circuit breaker to switch the controller means of the circuit breaker into the learning state, performing measurements with the measurement means of the circuit breaker comprising at least one of current based measurements comprising a measurement of an inrush current of an electric motor, a measurement of an overload current of the electric motor, a measurement of a time to get into a normal operating current of the electric motor, a measurement of a normal operating current on the powering side of the circuit breaker, and for performing a measurement of an input impedance of the electric motor connected to the circuit breaker, processing the performed current based measurements with the controller means of the circuit breaker to generate at least one configuration parameter for the trip unit of the circuit breaker, storing the at least one configuration parameter in the storage means of the circuit breaker, and applying the at least one configuration parameter for configuring the trip unit of the circuit breaker, wherein the controller means use the measured input impedance of the electric motor connected to the circuit breaker for identifying the motor type and use the identified motor type to load and/or calculate a set of parameters comprising typical operating values of the identified type of motor.

The controller means may use the least one configuration parameter for determining a value for tripping, and/or the controller means use the least one configuration parameter for determining a class value for defining a startup type of an electric motor connected to the circuit breaker, wherein the startup type comprises easy startup, normal startup, and heavy to very heavy startup.

The details of one or more embodiments are set forth in the accompanying drawings and the description below. Other features and advantages will be apparent from the description and drawings, and from the claims.

### DESCRIPTION OF DRAWINGS

Fig. 1 shows the PKE circuit breaker according to the prior art; and
Fig. 2 shows a block diagram of an arrangement of an embodiment of a motor-protective circuit breaker connected to an electric motor.

### DETAILED DESCRIPTION

In the following, functionally similar or identical elements may have the same reference numerals. Absolute values are shown below by way of example only and should not be construed as limiting.

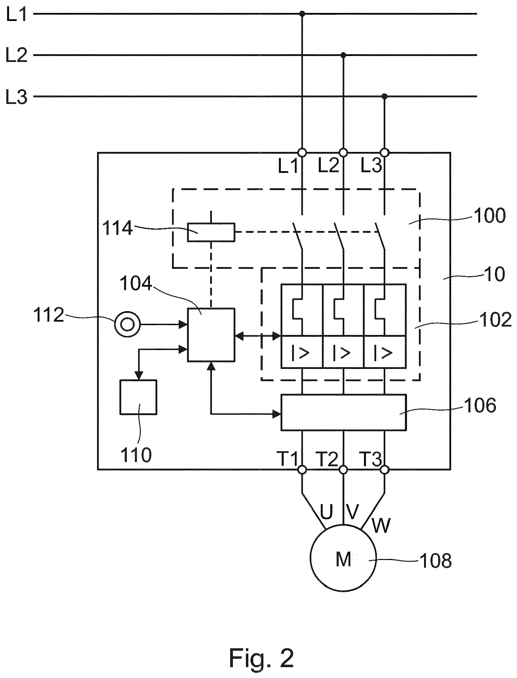

Fig. 2 shows an arrangement of a three-pole motor-protective circuit breaker 10 connected to a three-pole electric motor 108, wherein the power supply contacts L1, L2, L3 of the circuit breaker 10 are connected to three phase power supply lines L1,
L2, L3.

The circuit breaker 10 can analyze the electrical behavior of the electric motor 108 during learning phases and set the parameter for the protection setup automatically instead of manually setting the parameter as with the above described PKE circuit breaker shown in Fig. 1 and known from prior art.

The circuit breaker 10 has the possibility to be switched into a learning state. The switching may be performed with a simple switch, for example a button switch 112, or other actions to switch the circuit breaker 10 into such a learning state. During this learning state the circuit breaker 10 can measure one or more parameters such as an inrush current of the electric motor 108, an overload current of the electric motor 108, the time to get in a normal operating current of the electric motor 108, the normal operating current on the powering side of the circuit breaker 10, and the input impedance of the electric motor 108. One or more of these parameters can then be saved by leaving the learning state and used to protect the electric motor 108 when the measured values are not within required parameter ranges.

Measured parameters like input impedance of the electric motor 108 can be used to identifying the motor type, and this information can be used to use a set of parameters which are typical for this type of motor. There are several ways to get the device into the learning state. For example, as described above with a simple switch or as automatic step during commissioning at the customer application.

The motor-protective circuit breaker 10 shown in Fig. 2 comprises three power supply contacts L1, L2, L3 and three motor contacts T1, T2, T3. The power supply contacts L1, L2, L3 can be electrically connected to the respective phases of a three-phase power supply. The three motor contacts T1, T2, T3 can be electrically connected to the respective three poles U, V, W of the electric motor 108.

Inside the circuit breaker 10, a circuit breaker unit 100 with contacts for each of the three poles L1, L2, L3 is electrically connected on one side to the power supply contact L1, L2, L3 and on its other side to a trip unit 102, which is electrically connected to measurement means 106 being electrically connected to the motor contacts T1, T2, T3. When the contacts of the circuit breaker unit 100 are closed, electric currents may flow from the power supply lines L1, L2, L3 via the contacts, the trip unit 102 and the measurement means 106 into the motor poles U, V, W of the electric motor 108.

The contacts may be actuated by manual operation means 114 for closing or opening. Tripping, i.e. opening of the contacts of the circuit breaker unit 100 in case of a trip event, is controlled with controller means 104 and initiated by the trip unit 102. The controller means 104 can also be switched in the learning state with the button switch 112, for example when a user presses the button switch 112. In the learning state, the controller means 104 are configured to perform several steps to "learn" from measurements performed with the measurements means 106 the behavior of the electric motor 108, which comprises also the determining of one or more configuration parameters of the trip unit 102 adapted to the connected electric motor 108.

The controller means 104 are communicatively connected to the measurement means 106, and can instruct these to perform different measurements, particularly current based measurements such as the inrush current of the electric motor 108; overload current of the electric motor 108; time to get into a normal operating current of the electric motor 108; normal operating current on the powering side of the circuit breaker 10; input impedance of the electric motor 108. The measurements are particularly performed when the controller means 104 are switched and operated in the learning state. When switched and operated in the learning state, the controller means 104 may also configure the trip unit 102 to a default configuration, for example to only implement a short circuit protection in order to be able to perform particularly current measurements and to determine configuration parameters suitably adapted to the connected electric motor 108.

The one or more measurement results are transmitted from the measurement means 106 to the controller means 104 for further processing. The further processing comprises generating at least one configuration parameter for the trip unit 102 based on the one or more measurements. For example, the further processing may comprise determining the nominal current and the required degree of inertia (tripping class) based on the measurements and using the determined one or more values, which determine the trip time in case of an overload and/or a short circuit situation, for calculating the trip time for tripping by the trip unit 102 based on the current flowing during normal operation. Particularly, one or more values may be determined based on the inrush current, the overload current, the normal operating current of the electric motor 108, and/or the normal operating current on the powering side (contacts L1, L2, L3) of the circuit breaker 10.

The so determined one or more values can be stored by the controller means 104 as configuration parameter(s) for the trip unit 102 in storage means 110 of the circuit breaker 10. The storage means 110 may be for example implemented by a storage being external or internal of controller means. The storage means 110 may particularly be implemented by an erasable storage such as flash memory.

The one or more stored configuration parameters are then applied by the controller means 104 for configuring the trip unit 102, particularly to set the trip time for tripping by the trip unit 102. This may for example be accomplished in that the controller means 104 write the one or more stored configuration parameters and/or the calculated trip time in corresponding internal registers of the trip unit 102.

The controller means 104 may be also configured to use the least one configuration parameter stored in the storage means 110 for determining a class value for defining a startup type of the electric motor 108. The startup type may particularly comprise easy startup, normal startup, and heavy to very heavy startup. Thus, the circuit breaker 10 does not require a manual setup of the motor class as the known circuit breaker of the PKE type requires.

The above described steps performed by the controller means 104 and the measurements means 106 in the learning state of the controller means 104 may be executed for example when the circuit breaker 10 is installed, or when the installation was changed, for example the electric motor 108 was replaced. The learning state may be time limited, i.e. the controller means 104 may itself switch from the learning state back into a normal operation mode after lapse of a certain time period. However, it is also possible to terminate the learning state by again activating the switching means, particularly by pressing the button switch 112 a second time.

The switching into the learning state may also be performed from remote via a remote-control interface (not shown) of the circuit breaker 10, for example a bus interface or network interface. The switching means may also be integrated in the main manual switch for activating the circuit breaker 10 by closing the contacts of the circuit breaker unit 100. Then, each time when the circuit breaker 10 is activated, i.e. switched on to power the electric motor 108, the controller means 104 can be at the same time switched into the learning state and determine the one or more configuration parameters for the trip unit 102 and apply the determined configuration parameters.

## Claims

1. A motor-protective circuit breaker (10) comprising
• a circuit breaker unit (100),
• a trip unit (102),
• measurement means (106) switched between the trip unit (102) and motor contacts (T1, T2, T3) and provided for performing one or more of current based measurements comprising a measurement of an inrush current of an electric motor (108), a measurement of an overload current of the electric motor (108), a measurement of a time to get into a normal operating current of the electric motor (108), a measurement of a normal operating current on the powering side of the circuit breaker (10), and for performing a measurement of an input impedance of the electric motor (108),
• controller means (104) connected to the trip unit (102) and the measurements means (106),
• storage means (110) connected to the controller means (104), and
• switching means (112) connected to the controller means (104),
• wherein the controller means (104) are configured to be switched by the switching means (112) into a learning state, and to perform the following operations in the learning state: performing measurements with the measurement means (106) comprising at least one of the current based measurements and the measurement of the input impedance of the electric motor (108) connected to the circuit breaker (10), processing the at least one performed current based measurement to generate at least one configuration parameter for the trip unit (102), storing the at least one configuration parameter in the storage means (110), and applying the at least one configuration parameter for configuring the trip unit (102), and
• wherein the controller means (104) are configured to use the measured input impedance of the electric motor (108) connected to the circuit breaker (10) for identifying the motor type and to use the identified motor type to load and/or calculate a set of parameters comprising typical operating values of the identified type of motor.

2. The circuit breaker of claim 1, wherein the controller means (104) are configured to use the least one configuration parameter for determining a value for tripping.

3. The circuit breaker of claim 1 or 2, wherein the controller means (104) are configured to use the least one configuration parameter for determining a class value for defining a startup type of an electric motor (108) connected to the circuit breaker (10), wherein the startup type comprises easy startup, normal startup, and heavy to very heavy startup.

4. The circuit breaker of any preceding claim, wherein the switching means (112) comprise at least one of the following: a mechanical switch; an electronic switch; a remote switch.

5. A method of using a motor-protective circuit breaker (10) of any of the preceding claims, wherein
• an electric motor (108) with at least one motor contact (U, V, W) is provided,
• the at least one motor contact (U, V, W) of the electric motor (108) is electrically connected with a motor contact (T1, T2, T3) of the circuit breaker (10), and
• at least one power supply contact (L1, L2, L3) of the circuit breaker (10) is electrically connected with a power supply line (L1, L2, L3),
wherein the method comprises the steps of
• closing at least one contact pair of the circuit breaker unit (100) of the circuit breaker (10) for supplying the electric motor (108) with electric energy,
• activating the switching means (112) of the circuit breaker (10) to switch the controller means (104) of the circuit breaker (10) into the learning state,
• performing measurements with the measurement means (106) of the circuit breaker (10) comprising at least one of current based measurements comprising a measurement of an inrush current of an electric motor (108), a measurement of an overload current of the electric motor (108), a measurement of a time to get into a normal operating current of the electric motor (108), a measurement of a normal operating current on the powering side of the circuit breaker (10), and for performing a measurement of an input impedance of the electric motor (108) connected to the circuit breaker (10),
• processing the performed current based measurements with the controller means (104) of the circuit breaker (10) to generate at least one configuration parameter for the trip unit (102) of the circuit breaker (10),
• storing the at least one configuration parameter in the storage means (110) of the circuit breaker (10), and
• applying the at least one configuration parameter for configuring the trip unit (102) of the circuit breaker (10),
• wherein the controller means (104) use the measured input impedance of the electric motor (108) connected to the circuit breaker (10) for identifying the motor type and use the identified motor type to load and/or calculate a set of parameters comprising typical operating values of the identified type of motor.

6. The method of claim 5, wherein the controller means (104) use the least one configuration parameter for determining a value for tripping , and/or the controller means (104) use the least one configuration parameter for determining a class value for defining a startup type of an electric motor (108) connected to the circuit breaker (10), wherein the startup type comprises easy startup, normal startup, and heavy to very heavy startup.

## Patentansprüche

1. Motorschutzschalter (10), umfassend
• eine Schutzschaltereinheit (100),
• eine Auslöseeinheit (102),
• Messmittel (106), die zwischen die Auslöseeinheit (102) und die Motorkontakte (T1, T2, T3) geschaltet sind und zur Durchführung einer oder mehrerer strombasierter Messungen bereitgestellt sind, darunter eine Messung des Einschaltstroms eines Elektromotors (108), eine Messung des Überlaststroms des Elektromotors (108), eine Messung der Zeit bis zum Erreichen eines normalen Betriebsstroms des Elektromotors (108), eine Messung eines normalen Betriebsstroms auf der Seite der Speisung des Schutzschalters (10) sowie zur Durchführung einer Messung einer Eingangsimpedanz des Elektromotors (108),
• Steuerungsmittel (104), die mit der Auslöseeinheit (102) und den Messmitteln (106) verbunden sind,
• Speichermittel (110), die mit dem Steuerungsmittel (104) verbunden ist, und
• Schaltmittel (112), die mit dem Steuerungsmittel (104) verbunden sind,
• wobei die Steuerungsmittel (104) so konfiguriert sind, dass sie durch die Schaltmittel (112) in einen Lernzustand geschaltet werden und im Lernzustand die folgenden Vorgänge durchführen: Durchführung von Messungen mit den Messmitteln (106), die mindestens eine der stromgestützten Messungen und die Messung der Eingangsimpedanz des mit dem Schutzschalter (10) verbundenen Elektromotors (108) umfassen, Verarbeitung der mindestens einen durchgeführten stromgestützten Messung, um mindestens einen Konfigurationsparameter für die Auslöseeinheit (102) zu erzeugen, Speicherung des mindestens einen Konfigurationsparameters in den Speichermitteln (110), und Anwendung des mindestens einen Konfigurationsparameters zur Konfiguration der Auslöseeinheit (102), und
• wobei die Steuerungsmittel (104) so konfiguriert sind, dass sie die gemessene Eingangsimpedanz des an den Schutzschalter (10) verbundenen Elektromotors (108) zur Identifizierung des Motortyps verwenden und den identifizierten Motortyp verwenden, um einen Satz von Parametern zu laden und/oder zu berechnen, der typische Betriebswerte des identifizierten Motortyps umfasst.

2. Schutzschalter nach Anspruch 1, wobei die Steuerungsmittel (104) so konfiguriert sind, dass sie den mindestens einen Konfigurationsparameter zur Bestimmung eines Auslösewerts verwenden.

3. Schutzschalter nach Anspruch 1 oder 2, wobei die Steuerungsmittel (104) so konfiguriert sind, dass sie den mindestens einen Konfigurationsparameter zur Bestimmung eines Klassenwerts verwenden, um eine Anlaufart eines an den Schutzschalter (10) verbundenen Elektromotors (108) zu definieren, wobei die Anlaufart einen leichten Anlauf, einen normalen Anlauf und einen schweren bis sehr schweren Anlauf umfasst.

4. Schutzschalter nach einem der vorstehenden Ansprüche, wobei die Schaltmittel (112) mindestens eines der folgenden Elemente umfassen: einen mechanischen Schalter; einen elektronischen Schalter; einen Fernschalter.

5. Verfahren zum Verwenden eines Motorschutzschalters (10) nach einem der vorstehenden Ansprüche, wobei
• ein Elektromotor (108) mit mindestens einem Motorkontakt (U, V, W) bereitgestellt wird,
• der mindestens eine Motorkontakt (U, V, W) des Elektromotors (108) elektrisch mit einem Motorkontakt (T1, T2, T3) des Schutzschalters (10) verbunden ist und
• mindestens ein Stromversorgungskontakt (L1, L2, L3) des Schutzschalters (10) elektrisch mit einer Stromversorgungsleitung (L1, L2, L3) verbunden ist,
wobei das Verfahren die folgenden Schritte umfasst:
• Verschließen mindestens eines Kontaktpaares der Schutzschaltereinheit (100) des Schutzschalters (10) um dem Elektromotor (108) elektrische Energie zuzuführen,
• Aktivieren der Schaltmittel (112) des Schutzschalters (10), um die Steuerungsmittel (104) des Schutzschalters (10) in den Lernzustand zu versetzen,
• Durchführen von Messungen mit den Messmitteln (106) des Schutzschalters (10), die mindestens eine der folgenden strombasierten Messungen umfassen: eine Messung des Einschaltstroms eines Elektromotors (108), eine Messung eines Überlaststroms des Elektromotors (108), eine Messung der Zeit bis zum Erreichen eines normalen Betriebsstroms des Elektromotors (108), eine Messung eines normalen Betriebsstroms auf der Seite der Speisung des Schutzschalters (10) sowie eine Messung einer Eingangsimpedanz des an den Schutzschalter (10) verbundenen Elektromotors (108),
• Verarbeiten der durchgeführten strombasierten Messungen mit den Steuerungsmitteln (104) des Schutzschalters (10), um mindestens einen Konfigurationsparameter für die Auslöseeinheit (102) des Schutzschalters (10) zu erzeugen,
• Speichern des mindestens einen Konfigurationsparameters in den Speichermitteln (110) des Schutzschalters (10) und
• Anwenden des mindestens einen Konfigurationsparameters zum Konfigurieren der Auslöseeinheit (102) des Schutzschalters (10),
• wobei die Steuerungsmittel (104) die gemessene Eingangsimpedanz des an den Schutzschalter (10) angeschlossenen Elektromotors (108) zur Identifizierung des Motortyps verwenden und den identifizierten Motortyp verwenden, um einen Satz von Parametern zu laden und/oder zu berechnen, der typische Betriebswerte des identifizierten Motortyps umfasst.

6. Verfahren nach Anspruch 5, wobei die Steuerungsmittel (104) den mindestens einen Konfigurationsparameter zur Bestimmung eines Auslösewerts verwenden und/oder die Steuerungsmittel (104) den mindestens einen Konfigurationsparameter zur Bestimmung eines Klassenwerts verwenden, um eine Anlaufart eines an den Schutzschalter (10) verbundenen Elektromotors (108) zu definieren, wobei die Anlaufart einen leichten Anlauf, einen normalen Anlauf und einen schweren bis sehr schweren Anlauf umfasst.

## Revendications

1. Disjoncteur de protection de moteur (10), comprenant
• une unité de disjoncteur (100),
• une unité de déclenchement (102),
• des moyens de mesure (106) commutés entre l'unité de déclenchement (102) et des contacts de moteur (T1, T2, T3) et servant à effectuer une ou plusieurs mesures basées sur le courant comprenant une mesure d'un courant d'appel d'un moteur électrique (108), une mesure d'un courant de surcharge du moteur électrique (108), une mesure d'un temps nécessaire pour atteindre un courant de fonctionnement normal du moteur électrique (108), une mesure d'un courant de fonctionnement normal du côté alimentation du disjoncteur (10), et à effectuer une mesure d'une impédance d'entrée du moteur électrique (108),
• des moyens de commande (104) connectés à l'unité de déclenchement (102) et aux moyens de mesure (106),
• des moyens de stockage (110) connectés aux moyens de commande (104), et
• des moyens de commutation (112) connectés aux moyens de commande (104),
• dans lequel les moyens de commande (104) sont configurés pour être commutés par les moyens de commutation (112) à l'état d'apprentissage, et pour effectuer les opérations suivantes dans l'état d'apprentissage : effectuer des mesures avec les moyens de mesure (106) comprenant au moins un élément parmi des mesures basées sur le courant et la mesure de l'impédance d'entrée du moteur électrique (108) connecté au disjoncteur (10), traiter l'au moins une mesure basée sur le courant effectuée pour générer au moins un paramètre de configuration pour l'unité de déclenchement (102), stocker l'au moins un paramètre de configuration dans les moyens de stockage (110), et appliquer l'au moins un paramètre de configuration pour configurer l'unité de déclenchement (102), et
• dans lequel les moyens de commande (104) sont configurés pour utiliser l'impédance d'entrée mesurée du moteur électrique (108) connecté au disjoncteur (10) pour identifier le type de moteur et pour utiliser le type de moteur identifié pour charger et/ou calculer un ensemble de paramètres comprenant des valeurs de fonctionnement typiques du type de moteur identifié.

2. Disjoncteur selon la revendication 1, dans lequel les moyens de commande (104) sont configurés pour utiliser l'au moins un paramètre de configuration pour déterminer une valeur de déclenchement.

3. Disjoncteur selon la revendication 1 ou 2, dans lequel les moyens de commande (104) sont configurés pour utiliser l'au moins un paramètre de configuration afin de déterminer une valeur de classe pour définir un type de démarrage d'un moteur électrique (108) connecté au disjoncteur (10), dans lequel le type de démarrage comprend un démarrage facile, un démarrage normal et un démarrage difficile à très difficile.

4. Disjoncteur selon une quelconque revendication précédente, dans lequel les moyens de commutation (112) comprennent au moins l'un des éléments suivants : un interrupteur mécanique ; un interrupteur électronique ; un interrupteur à distance.

5. Procédé d'utilisation d'un disjoncteur de protection de moteur (10) selon l'une quelconque des revendications précédentes, dans lequel
• un moteur électrique (108) avec au moins un contact moteur (U, V, W) est prévu,
• l'au moins un contact de moteur (U, V, W) du moteur électrique (108) est électriquement connecté à un contact de moteur (T1, T2, T3) du disjoncteur (10), et
• au moins un contact d'alimentation (L1, L2, L3) du disjoncteur (10) est électriquement connecté à une ligne d'alimentation (L1, L2, L3),
dans lequel le procédé comprend les étapes suivantes
• fermeture d'au moins une paire de contacts de l'unité de disjoncteur (100) du disjoncteur (10) pour alimenter le moteur électrique (108) en énergie électrique,
• activation des moyens de commutation (112) du disjoncteur (10) pour faire passer les moyens de commande (104) du disjoncteur (10) à l'état d'apprentissage,
• réalisation des mesures avec les moyens de mesure (106) du disjoncteur (10) comprenant au moins un élément parmi une mesure basée sur le courant comprenant une mesure d'un courant d'appel d'un moteur électrique (108), une mesure d'un courant de surcharge du moteur électrique (108), une mesure d'un temps nécessaire pour atteindre un courant de fonctionnement normal du moteur électrique (108), une mesure d'un courant de fonctionnement normal du côté alimentation du disjoncteur (10), et réalisation d'une mesure d'une impédance d'entrée du moteur électrique (108) connecté au disjoncteur (10),
• traitement des mesures effectuées sur la base du courant avec les moyens de commande (104) du disjoncteur (10) pour générer au moins un paramètre de configuration pour l'unité de déclenchement (102) du disjoncteur (10),
• stockage de l'au moins un paramètre de configuration dans les moyens de stockage (110) du disjoncteur (10), et
• application de l'au moins un paramètre de configuration pour configurer l'unité de déclenchement (102) du disjoncteur (10),
• dans lequel les moyens de commande (104) utilisent l'impédance d'entrée mesurée du moteur électrique (108) connecté au disjoncteur (10) pour identifier le type de moteur et utilisent le type de moteur identifié pour charger et/ou calculer un ensemble de paramètres comprenant des valeurs de fonctionnement typiques du type de moteur identifié.

6. Procédé selon la revendication 5, dans lequel les moyens de commande (104) utilisent l'au moins un paramètre de configuration pour déterminer une valeur de déclenchement, et/ou les moyens de commande (104) utilisent l'au moins un paramètre de configuration pour déterminer une valeur de classe afin de définir un type de démarrage d'un moteur électrique (108) connecté au disjoncteur (10), dans lequel le type de démarrage comprend un démarrage facile, un démarrage normal et un démarrage difficile à très difficile.
